# EUROPEAN PATENT APPLICATION

(11) **EP 1 795 829 A2**
(43) Date of publication of application: **13.06.2007**
(21) Application number: 06381052.7
(22) Date of filing: 28.11.2006
(51) Int. Cl.: F24J 2/54, H01L 31/042

(54) **Linear solar tracker for a photovoltaic installation**

(30) Priority: 07.12.2005 ES 200502676 U
(71) Applicant: Cesareo, Rivas Garcia, 09139 Villalbilla de Busrgos (ES)
(72) Inventor: Cesareo, Rivas Garcia, 09139 Villalbilla de Busrgos (ES)
(74) Representative: Urizar Anasagasti, Jesus Maria

(57) **Abstract**

A linear solar tracker for a photovoltaic installation combining several solar panels (1), each of which has an east-west rotating shaft and another shaft, perpendicular to the previous one, varying the seasonal inclination of the panel, provided with means for coupling with a mechanical transmission allowing the joint actuation both at an east-west orientation level and a north-south seasonal orientation; each of which panels rests on an individual support (2) having a crankpin (3) integrating the two rotating shafts: an upper shaft (4) favoring the east-west orientation which is rotated by a lever (5); and another lower shaft (6) with a north-south inclination which is actuated from a connecting rod (7).

## Description

### Object of the Invention

The present invention relates to a solar tracker for a photovoltaic installation, of the type combining several solar panels, each of which has a east-west rotating shaft and another shaft, perpendicular to the previous one, varying the seasonal inclination of the panel, provided with means for coupling with a mechanical transmission allowing the joint actuation both at an east-west orientation level and a north-south seasonal orientation level.

### Background of the Invention

The current equipment for solar energy production, assemble photovoltaic plates in a panel, and the maximum energy capture occurs when they are located perpendicular to solar rays. To that end, the panels move in two shafts, a vertically rotating shaft and another shaft varying its angular position, such that an optimal orientation is achieved, independently of the season of the year, given that the sun changes its height according to the time of day and also seasonally.

Document ES-1050814 describes a solar tracker having a circular platform or track and a mechanism for varying the angle of each of the plates located in a panel. In turn, document ES-1044310 describes a tracker with two shafts, the rotating shaft rotates the support post of the panel around a circular track and the angular variation by means of a hinge through which the panel is fixed to the post.

Document ES-2157857 describes an autonomous and interactive system comprising a base fixed to the ground, a body rotating with respect to the base with a tilting face which carries out two movements for tracking the sun, an azimuth movement between 0 and 280° between the rising and setting, and a zenith movement between 90 and 45° between the horizon and the highest position of the sun by means of an azimuth/zenith tracker, locating said field perpendicular to the sun so as to achieve the maximum photon capture.

Document ES-1059590 describes a device for the orientation of a set of solar panels, each of which comprises a support post on which a panel of photovoltaic plates is fixed, which panel has two rotating shafts independently controlling the angle formed by the panel sideways and the inclination thereof, all the posts of the panels being joined by a mechanical transmission to an actuation mechanism, which directed by a single electronic micro-controller located in one of the panels, determines the position that this panel must have at all times to be located perpendicular to the sun, said transmission changing the position of the set of panels in unison, as regards both the side orientation and the inclination. Each of the posts has at the inside a shaft comprising in an intermediate area a coupling by means of an endless screw or a similar means, which transmits the rotating movement in the pulley in a vertical movement thereof, modifying the degree of inclination of the panel through an upper connecting rod when the orientation of all the panels is procured through the cable or chain. This system involves the existence of a support post with a very strong and therefore a very expensive structure offering a great resistance to wind.

### Description of the Invention

The present invention relates to an installation of several panels arranged aligned horizontally, oriented to the south and controlled from two actuators moving them in unison if they were a Venetian blind with a side inclination.

Each of the panels forming this installation rests on an individual support with a limited height according to that of the panel and has a crankpin in which the corresponding panel is coupled at the side and at the bottom part, which crankpin integrates the two rotating shafts: an upper shaft favoring the east-west orientation which is rotated by a lever; and a lower shaft with a north-south inclination actuated from a connecting rod.

The shaft of the crankpin favoring the north-south orientation is a horizontal shaft connecting it to the support of the panel, which in the lower part has a linkage for an actuation connecting rod linking in the lower end with a longitudinal shaft controlling the movement of the north-south orientation of the set of panels in unison.

The shaft favoring the east-west orientation is parallel to the panel at the bottom part and the crankpin hinges therein. At one of the ends it has a lever oriented downwards, provided with a means for controlling the set of panels in unison.

According to a feature of the present invention, the distance between panels is comprised between 1 and 1/3 of the total width of each panel, the assembly of the installation having respective shadow sensors located at the ends of the line formed by the panels, the latter associated to an automatic tracking system with which the degree of east-west inclination is determined according to the shadow produced in the corresponding attached panel and to the solar inclination, in order to maintain the perpendicularity of the solar rays on the panel.

It is therefore a system in which several panels move in unison orienting themselves both in a north-south and east-west direction with a single electronic tracker; but unlike the panels subdivided in vertical sheets inclining as if they were a Venetian blind, it is really several panels aligned horizontally, therefore the uniform movement is carried out simply and its structure is much less flamboyant than other installations. With respect to the panels having a hollow vertical shaft in which the shaft of the panel rotates is not similar either, firstly because it subdivides the panel in several smaller ones, such that the wind forces are divided and are substantially minimized, therefore the support structure is also minimized and simplified.

### Description of the Drawings

To complement the description which is being made and for the purpose of facilitating the understanding of the features of the invention, a set of drawings is attached to this specification in which the following has been shown with an illustrative and non-limiting character:

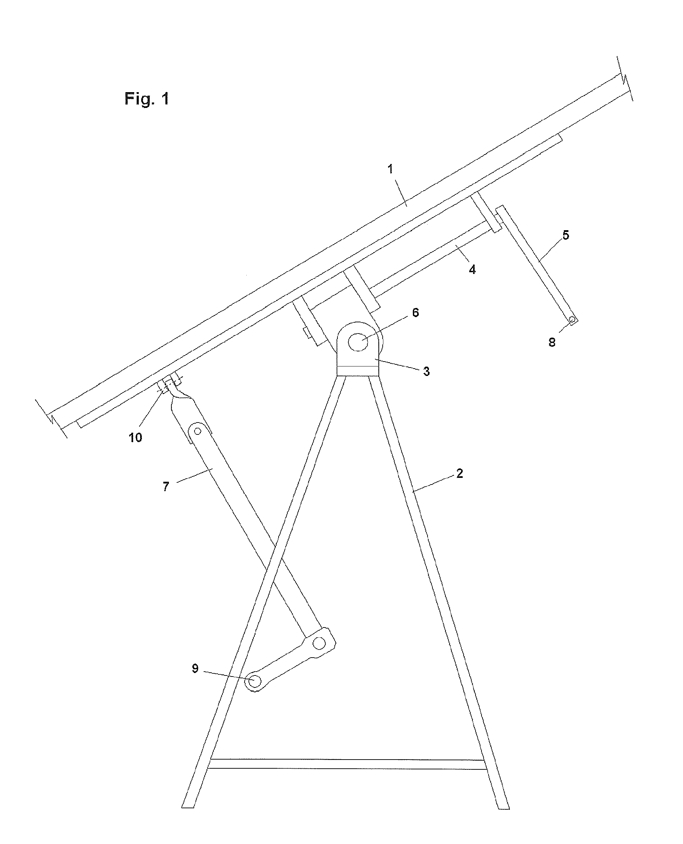

Figure 1 shows a side elevational view of one of the panels forming part of the tracker of a photovoltaic installation.

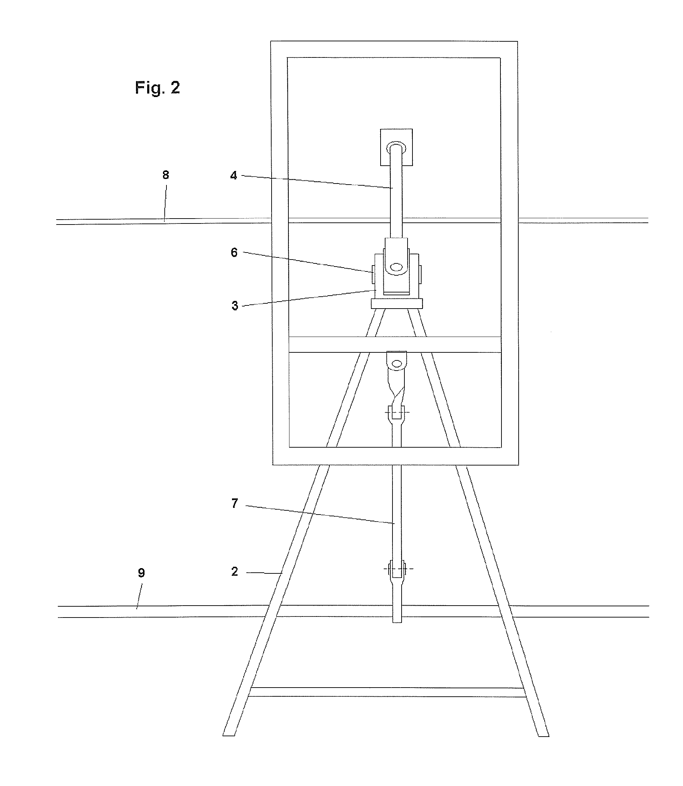

Figure 2 shows a front elevational view of the previous panel.

### Preferred Embodiment of the Invention

As can be observed in the referenced figures, the solar tracker for a photovoltaic installation object of this model combines several solar panels, each of which has an east-west rotating shaft and another shaft, perpendicular to the previous one, varying the seasonal inclination of the panel. The installation is provided with means for coupling with a mechanical transmission allowing the joint actuation both at an east-west orientation level and a north-south seasonal orientation level.

Each of the panels (1) rests on an individual support (2) with a limited height according to that of the panel through a crankpin (3) coupling with the panel (1) at the centre and at the bottom part. Said crankpin (3) integrates the two rotating shafts: an upper shaft (4) favoring the east-west orientation which is rotated by a lever (5) and a lower shaft (6) with a north-south inclination actuated from a connecting rod (7).

A photovoltaic installation is formed by several horizontally aligned panels (1) oriented to the south and controlled from two actuators (8-9) connecting all the levers (5) and all the connecting rods (7), such that they move the set of panels (1), as if they were a Venetian blind with a side inclination.

The shaft (6) of the crankpin (3) favoring the north-south orientation is a horizontal shaft connecting it to the support (2) of the panel. At the bottom part, the panel (1) has a linkage (10) for an actuation connecting rod (7) linking in the lower end with a longitudinal shaft (9) controlling the movement of the north-south orientation of the set of panels (1) in unison.

In turn, the shaft (4) favoring the east-west orientation is parallel to the panel (1) at the bottom part, the crankpin (3) hinges therein and at the free end there is a lever (5), oriented downwards, provided in its free end with a means for controlling the set of panels in unison for its east-west orientation, formed by a cable or a tension device of similar nature.

Having sufficiently described the nature of the invention, as well as a preferred embodiment, it is stated for all intents and purposes that the materials, shape, size and arrangement of the described elements can be modified, provided that this does not entail an alteration of the essential features of the invention that are claimed below.

## Claims

1. A linear solar tracker for a photovoltaic installation combining several solar panels, each of which has an east-west rotating shaft and another shaft, perpendicular to the previous one, varying the seasonal inclination of the panel, provided with means for coupling with a mechanical transmission allowing the joint actuation both at an east-west orientation level and a north-south seasonal orientation level, **characterized in that** each of the panels (1) rests on an individual support (2) with a limited height according to that of the panel, having a crankpin (3) in which the corresponding panel (1) is coupled at the centre and at the bottom part, which crankpin integrates the two rotating shafts: an upper shaft (4) favoring the east-west orientation which is rotated by a lever (5); and a lower shaft (6) with a north-south inclination actuated from a connecting rod (7); the set of panels (1) being horizontally aligned, oriented to the south and controlled from two actuators (8-9) connecting all the levers (5) and all the connecting rods (7) so as to move the set of panels (1) as if they were a Venetian blind with a side inclination.

2. A tracker according to the previous claim, **characterized in that** the shaft (6) of the crankpin (3) favoring the north-south orientation is a horizontal shaft connecting it to the support (2) of the panel, the support of the panel (1) having in the lower part a linkage (10) for an actuation connecting rod (7) linking in the lower end with a longitudinal shaft (9) controlling the movement of the north-south orientation of the set of panels (1) in unison.

3. A tracker according to the previous claims, **characterized in that** the shaft (4) favoring the east-west orientation is parallel to the corresponding panel (1) at the bottom part and the crankpin (3) hinges therein, whereas in the end it has a lever (5) oriented downwards which in the end has a means for controlling the set of panels in unison for its east-west orientation.

4. A tracker, according to the previous claims, **characterized in that** distance between panels is comprised between 1 and 1/3 of the total width of each panel (1), the assembly of the installation having respective shadow sensors located at the ends of the line formed by the panels, the latter associated to an automatic tracking system with which the degree of east-west inclination is determined according to the shadow produced in the corresponding attached panel and to the solar inclination, in order to maintain the perpendicularity of the solar rays on the panel.
